# FASCICULE DE BREVET EUROPEEN

(11) **EP 2 139 212 B1**
(45) Date de publication et mention de la délivrance du brevet: **23.02.2011**
(21) Numéro de dépôt: 09159090.1
(22) Date de dépôt: 29.04.2009
(51) Int. Cl.: H04M 3/00

(54) **Procédé et dispositif de traitement de données numériques représentatives de signaux audio dans un système de réception**
Verfahren und Vorrichtung für Audiosignaldarstellungsdaten in einem Empfangssystem
Method and system for the treatment of audio signal representative data in a reception system

(30) Priorité: 27.06.2008 FR 0854361
(43) Date de publication de la demande: 30.12.2009
(73) Titulaire: Alcatel Lucent, 75008 Paris (FR)
(72) Inventeur: Moulehiawy, Abdelkrim, 92707, COLOMBES (FR); Zrihen, Jerremy, 92707, COLOMBES (FR); Fadili, Moulay c/o Alcatel-Lucent Enterprise, 92707, COLOMBES (FR)
(74) Mandataire: Nicolle, Olivier

(56) Documents cités:
- EP-A- 1 179 820
- US-A1- 2007 116 242

## Description

La présente invention concerne le traitement de données numériques représentatives de signaux audio dans un système de réception.

Elle trouve une application générale dans les communications électroniques qui utilisent les réseaux et protocole Internet (IP pour « interne Protocol»). De telles communications électroniques, appelées encore «Voice over IP (VoIP)», pour voix sur IP supportent non la parole mais aussi les tonalités DTMF(«Dual-Tone Multi Frequency), fax, modem, et sont.

Elle trouve une application particulière dans les systèmes de dialogue dé type serveur vocal interactif, appelé encore IVR pour «Interactive Voice Response» dans lesquels les tonalités DTMF, c'est-à-dire les fréquences, engendrées par les touches des tétéphones sont utilisées pour permettre l'interaction des utilisateurs sous la forme de choix numérotés sélectionnables à partir du clavier et dans lesquels la reconnaissance vocale ainsi que la synthèse vocale sont utilisées pour générer dynamiquement certains énoncés et interpréter les choix ainsi prononcés.

On sait que la parole est envoyée dans les réseaux IP sous la forme de paquets qui voyagent selon différentes routes pour arriver à destination. Au niveau du récepteur, un paquet peut arriver en retard, corrompu ou simplement ne pas arriver. Il en résulte une perte qui peut affecter la restitution correcte de la parole.

Pour remédier à cet inconvénient, on utilise des algorithmes permettant de masquer les paquets perdus Par exemple, l'algorithme connu sous le nom d' «interpolation PLC» pour «Packet Loss Concealment» prédit le paquet perdu sur la base de l'échantillon précédent.

Une telle interpolation PLC est conçu spécialement pour les signaux de parole.
Le document EP 1 179 820 décrit un dispositif de traitement de données numériques représentatives de signaux audio dans un système de réception comprenant une entrée (32) et un second détecteur (36).

Par contre, les signaux audio ne correspondant pas à de la parole, appelés ci-après non-parole ou déterministes, tels que lès tonalités DTMF sont généralement envoyés à travers les réseaux IP sous la forme de messages de signalisation dont la détection par une passerelle de type «Mediagateway» ou un serveur vocal interactif peut être relativement long. Il peut alors en résulter une interpolation PLC erronée et/ou la génération de doublons de messages DTMF, ce qui affecte d'autant la qualité de traitement desdites données numériques correspondantes.

La présente invention remédie à cet inconvénient.

Elle porte sur un dispositif de traitement de données numériques représentatives de signaux audio dans un système de réception comprenant :
- une entrée recevant un flux de données numériques représentatives de signaux audio,
- un premier détecteur apte à détecter, dans ledit flux ainsi reçu, des données numériques correspondant à des données interpolées ou à des données non-interpolées.
- un second détecteur apte, en cas de détection de données courantes interpolées, à analyser les données précédentes, pour y détecter celles correspondant à de la non-parole,
- des moyens de brouillage aptes en cas de non parole, à brouiller les données courantes selon une loi de brouillage choisie; et
- une sortie pour envoyer les données courantes ainsi brouillées à destination d'un destinataire distant à travers un réseau de communication, de manière à être interprétées par ledit destinataire distant comme n'étant pas des données de non parole.

Ainsi, grâce au dispositif selon l'invention, les données courantes correspondant à de la non-parole ne sont pas transmises sous la forme de message de signalisation de non parole mais sous la forme de données brouillées, ce qui permet d'éviter des interpolations erronées et/ou la génération de doublons ce message de non-parole en cas de transmission de données de non parole à travers un réseau de communication IP.

En pratique, le dispositif comprend en outre des moyens de mémorisation propres à mémoriser les données précédentes.

Par exemple, la loi de brouillage appartient au groupe formé par un silence pur, un décalage fréquentiel, une atténuation ou pré-accentuation fréquentielle, une suppression d'une composante fréquentielle, une modulation en fréquence, une addition d'une composante fréquentielle. De préférence, la loi de brouillage est choisie de telle sorte de ne pas apporter de dégradation de la qualité subjective et objective du signal audio.

La présente invention a également pour objet un procédé de traitement de données numériques représentatives de signaux audio dans un système de réception dans lequel:
- on reçoit un flux de données numériques représentatives de signaux audio,
- on détecte, dans ledit flux ainsi reçu, des données numériques courantes correspondant à des données interpolées et des données non-interpolées,
- en réponse à la détection de données interpolées, on analyse les premiers échantillons des données précédentes, pour y détecteur celles correspondant à de la non-parole,
- en cas de détection de données de non parole, on brouille les données courantes selon une loi de brouillage choisie; et
- on envoie les données courantes ainsi brouillées à destination d'un destinataire distant à travers un réseau de communication, de manière à être interprétées par ledit destinataire distant comme n'étant, pas des données de non parole.

D'autres caractéristiques et avantages de l'invention apparaîtront à la lumière de la description détaillée ci-après et des dessins dans desquels:
- la **figure 1** représente schématiquement un appareil émetteur envoyant des tonalités DTMF à un appareil récepteur à travers un réseau IP via des passerelles, et les chronogrammes correspondant,
- la **figure 2** représente schématiquement les appareils de la figure 1. avec une passerelle équipée du dispositif de traitement selon l'invention, et
- la **figure 3** représente schématiquement l'organigramme des étapes du procédé selon l'invention.

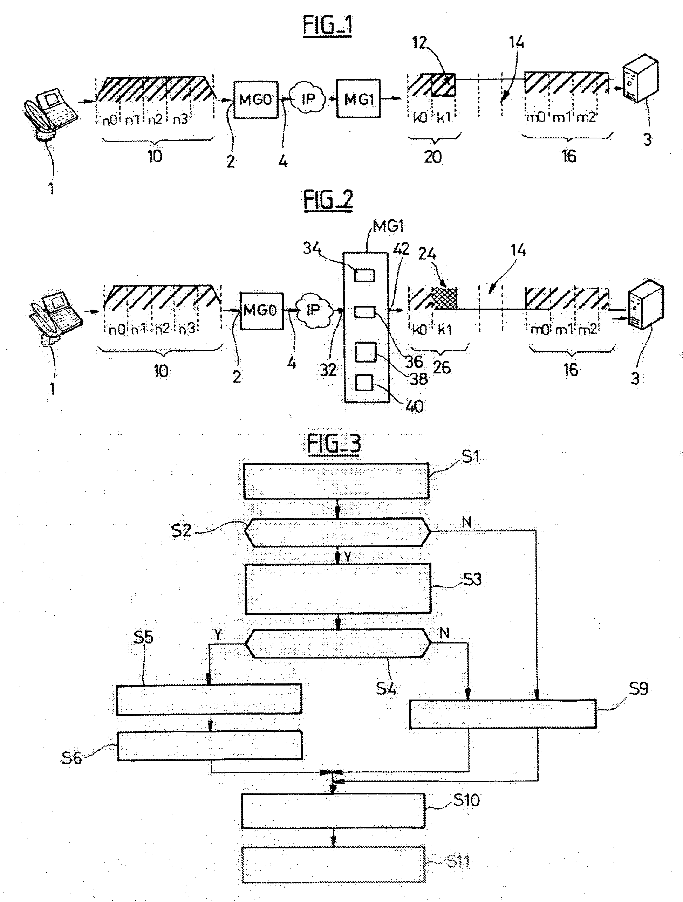

En référence à la **figure 1**, on a représenté un appareil MG0 de type IVR (Interactive Voice Résponse), passerelle (média gateway), ou équivalent.

L'appareil MG0 comprend une entrée 2 recevant un flux de données numériques représentatives de signaux audio en provenance d'un terminal 1.

Le flux de données numériques peut contenir de la parole, et des signaux de type DTMF, fax, modem ou analogues en provenance de terminaux 1 utilisateur qui peuvent être fixes ou mobiles.

L'appareil MG0 comprend un détecteur (non représenté) qui détecte dans le flux ainsi reçu, les données numériques courantes correspondant à de la parole et celles correspondant à de la non-parole, appelée encore « non speech » en anglo-saxon.

Un codeur de parole (non représenté) de type « codec » code en paquets selon un standard choisi tel que ITU-T G.7xx, 3GPP, les données numériques correspondant à de la parole.

Une sortie 4 envoie les données numériques courantes ainsi codées en paquets à destination d'un destinataire distant 3 à, travers un réseau dé communication IP et une autre passerelle MG1. Le destinataire 3 peut être une machine de type IVR.

On va illustrer le cas de tonalités DTMF 10 reçus par exemple en provenance d' un terminal 1.

Au temps n0. la portion DTMF (les premiers échantillons) n'est pas détectée. Cette portion est envoyée à travers le réseau IP à destination de l'appareil MG1 sous la forme de paquets, par exemple en paquets RTP pour « real time protocol ».

Aux temps n1, n2,..., (cycle horloge égal par exemple à 10 ms) les portions DTMF suivantes sont détectées. L'appareil MG0 arrête la transmission 14 des paquets RTP et envoie à MG1 un message de signalisation (non parole) pour générer la tonalité DTMF correspondante 16.

Du côté de l'appareil MG1, au temps k0, l'appareil MG1 reçoit un paquet contenant une portion DTMF.

Au temps k1, un algorithme d'interpolation de type PLC intervient en réponse à la non réception de paquet en provenance de l'appareil MG0.

L'appareil MG1 engendre alors un signal similaire à la portion précédente via interpolation 12. Cela conduit à une tonalité DTMF 20 fausse dont la longueur (k0+k1) peut excéder la durée T1 et ainsi être détectée par l'appareil IVR 3 qui peut être aussi de type media gateway.

Au temps m0, l'appareil MG1 va engendrer une tonalité DTMF 16 correcte en réponse à la signalisation transmise par l'appareil MG0.

Ainsi, une machine IVR 3 connectée à la suite de l'appareil MG1 peut ainsi détecter deux tonalités DTMF, l'une est correcte 16 et l'autre est fausse 20.

En référence à la **figure 2**, on retrouve les appareils MG0 et MG1 de la figure 1.

L'appareil MG1 comprend une entrée 32 recevant le flux de données numériques représentatives de signaux audio, en provenance du réseau IP.

Un détecteur 34 détecte, dans ledit flux ainsi reçu, des données numériques courantes correspondant à des données interpolées ou à des données non-interpolées.

Un autre détecteur 36, en réponse à la détection de données courantes correspondant à des données interpolées, analyse les premiers échantillons des données précédentes, et détecte dans lesdits échantillons des données précédentes ceux correspondant à de la non-parofe.

Des moyens de brouillage 38, en cas de détection positive, brouillent les échantillons des données courantes selon une loi de brouillage choisie.

Des moyens de mémorisation 40 mémorisent les échantillons précédents.

Une sortie 42 envoie les données courantes correspondant à de la non-parole ainsi brouillées à destination d'un destinataire distant 3 de manière à être interprétées par ledit destinataire distant 3 comme n'étant pas des données numériques de non parole.

Ainsi, les moyens de brouillage 38 sont aptes en réponse aux détections 34 (interpolée) et 36 (non parole) à brouiller les données courantes de non parole selon une loi de brouillage choisie.

En pratique, au temps n0, la portion DTMF (les premiers échantillons) n'est pas détectée. Cette portion est envoyée à travers le réseau IP à destination de l'appareil MG1 sous la forme de paquets, par exemple en paquets RTP pour « real time protocol ».

Aux temps n1 n2,..., les portions DTMF suivantes sont détectées. L'appareil MG0 arrête la transmission 14 des paquets RTP et envoie à MG1 un message de signalisation 16 pour générer la tonalité DTMF correspondante.

Du côté de l'appareil MG1. au temps k0, l'appareil MG1 reçoit un paquet contenant une portion DTMF. L'appareil MG1 analyse le paquet (ici données précédentes) et le mémorise dans la mémoire tampon 40.

Au temps K1 (ici données courantes), un algorithme de type PLC intervient en réponse à la non réception du paquet n1 en provenance de l'appareil MG0.

L'appareil MG1 met en oeuvre la détection 36 appliquée au tampon 40.

A la détection 36 de non-parole type DTMF, l'appareil MG1 engendre alors un signal brouille 24. Cela conduit à une tonalité DTMF 24 brouillée de type parole.

La tonalité DTMF 26 contient alors une portion DTMF et une portion brouillée qui ne peut pas être détectée en tant que tonalité DTMF vraie par une machine IVR placée à la suite de l'appareil MG1 car le signal ainsi brouillé sort des critères de détection DTMF de la machine IVR.

Au temps m0, l'appareil MG1 va engendrer seulement une tonalité DTMF 16 correcte en réponse à la signalisation transmise par l'appareil MG0.

Ainsi, une machine IVR connectée à la suite de l'appareil MG1 peut ainsi détecter qu'une seule tonalité DTMF, la tonalité correcte 16 sur la sortie 42, la portion 26 étant interprétée comme n'étant pas de la non-parole,

En référence à la **figure 3**, on a représenté l'organigramme des étapes illustrant le procédé selon l'invention,

Le procédé de traitement de données numériques représentatives de signaux audio est appliqué à un appareil de type media gateway (étape S1) dans lequel on reçoit un flux de données numériques représentatives de signaux audit, en provenance du réseau IP, et on décode le flux selon un standard choisi tel que ITU-T G.7xx, 3GPP.

Selon l'étape S2, on détecte, dans ledit flux ainsi reçu et décodé, des données numériques courantes correspondant à des données interpolées et des données non-interpolées.

En cas de détection de données non interpolées, celles-ci sont traitées par la machine IVR selon l'étape S9.

En cas de détection de données courantes correspondant à des données interpolées, on analyse les premiers échantillons des données précédentes (étape S3), et on détecte dans lesdits échantillons des données précédentes ceux correspondant à de la non-parole (étape S4).

En cas de détection positive (non parole), on brouille lesdits échantillons des données courantes selon une loi de brouillage choisie (étape S5) et on utilise ces échantillons brouillées dans la mémoire de sortie 42 (étape S6).

En cas de détection négative (parole), les données interpolées de parole sont traitées par la machine IVR selon l'étape S9.

On mémorise les échantillons de données précédentes en mémoire tampon 40 (étape S10).

On envoie les données courantes ainsi brouillées à destination d'un destinataire distant (étape S11), de manière à être interprétées par ledit destinataire distant comme n'étant pas de la non parole.

En pratique, la loi de brouillage appartient au groupe formé par un silence pur, un décapage fréquentiel, une atténuation ou pré-accentuation fréquentielle, une suppression d'une composante fréquentielle, une modulation en fréquence, une addition d'une composante fréquentielle,

## Revendications

1. Dispositif de traitement de données numériques représentatives de signaux audio dans un système de réception comprenant :
- une entrée (32) recevant un flux de données numériques représentatives de signaux audio, en provenance d'un réseau de communication :
- un premier détecteur (34) apte à détecter, dans ledit flux ainsi reçu, des données numériques courantes correspondant à des données interpolées ou à des données non-interpolées,
- un second détecteur (36) apte, en cas de données interpolées, à analyser les données précédentes, pour y détecter celles correspondant à de la non-parole,
- des moyens de brouillage (38) aptes en cas de non parole, à brouiller les données courantes selon une loi de brouillage choisie; et
- une sortie (42) pour envoyer les données courantes de non-parole ainsi brouillées (24, 26) à destination d'un destinataire distant (3) à travers un réseau de communication, de manière à être interprétées par ledit destinataire distant comme n'étant pas des données de non parole.

2. Dispositif selon la revendication 1 comprenant en outre des moyens de mémorisation (40) des échantillons des données précédentes.

3. Dispositif selon la revendication 1 dans lequel la loi de brouillage est un Décalage fréquentiel.

4. Dispositif selon la revendication 1 dans lequel la loi de brouillage est une Atténuation ou pré-accentuation fréquentielle.

5. Dispositif selon la revendication 1 dans lequel la loi de brouillage est une suppression d'une composante fréquentielle.

6. Dispositif selon la revendication 1 dans lequel la loi de brouillage est une modulation en fréquence.

7. Dispositif selon la revendication 1 dans lequel la loi de brouillage est une addition d'une composante fréquentielle.

8. Dispositif selon la revendication 1 dans lequel la loi de brouillage est un silence pur.

9. Dispositif selon l'une des revendications 1 à 8, dans lequel le signal audio contient de la parole, et des signaux de type DTMF, fax, modem ou analogues.

10. Procédé de traitement de données numériques représentatives de signaux audio dans un système de réception dans lequel.
- on reçoit un flux de données numériques représentatives de signaux audio,
- on détecte, dans ledit flux ainsi reçu, des données numériques courantes correspondant à des données interpolées et des données non-interpolées,
- en réponse à la détection de données interpolées, on analyse les données précédentes, pour y détecter des données de non-parole,
- en cas de détection de non parole, on brouille les données courantes selon une loi de brouillage choisie; et
- on envoie les données ainsi brouillées à destination d'un destinataire distant à travers un réseau de communication, de manière à être interprétées par ledit destinataire distant comme n'étant pas des données de non-parole.

## Claims

1. A device for processing digital data representative of audio signals within a reception system comprising
- an input (32) receiving a flow of digital data representative of audio signals, coming from a communication network
- a first detector (34) capable of detecting, within said flow thereby received, common digital data corresponding to interpolated or non-interpolated data,
- a second detector (36) capable, in the event of interpolated data, of analyzing the preceding data, in order to detect therein that data which corresponds to non-speech,
- scrambling means (38), capable, in the event of non-speech, of scrambling the common data according to a chosen scrambling law, and
- an output (42) for sending common non-speech data thereby scrambled (24, 26) to a remote recipient (3) over a communication network so as to be interpreted by said remote recipient as not being non-speech data.

2. A device according to claim 1, further comprising means for memorizing (40) samples of previous data:

3. A device according to claim 1, wherein the scrambling law is a frequency shift.

4. A device according to claim 1, wherein the scrambling law is an attenuation or frequency pre-accentuation.

5. A device according to claim 1, wherein the scrambling law is a removal of a frequency component.

6. A device according to claim 1, wherein the scrambling law is a frequency modulation.

7. A device according to claim 1, wherein the scrambling law is an addition of a frequency component.

8. A device according to claim 1, wherein the scrambling law is complete silence.

9. A device according to one of the claims 1 to 8, wherein the audio signal contains speech and DTMF, fax, modem or similar signals.

10. A method for processing digital data representative of audio signals within a reception system, wherein:
- digital data representative of audio signals are received,
- within said flow thereby received, common digital data corresponding to interpolated data and non-interpolated data are detected,
- in response to the detection of interpolated data, the previous data is analyzed, in order to detect therein non-speech data, and in the event that non-speech data is detected, the common data is scrambled according to a chosen scrambling law; and
- the data thereby scrambled is sent to a remote recipient over a communication network, so as to be interpreted by said remote recipient as not being non-speech data.

## Patentansprüche

1. Vorrichtung zur Verarbeitung von digitalen Audiosignaldarstellungsdaten in einem Empfangssystem, umfassend:
- Einen Eingang (32) für den Empfang eines digitalen Audiosignaldarstellungsdatenflusses von einem Kommunikationsnetzwerk,
- einen ersten Detektor (34), welcher dazu ausgelegt ist, in dem besagten empfangenen Datenfluss momentane digitale Daten, welche interpolierten Daten oder nicht interpolierten Daten entsprechen, zu erfassen,
- einen zweiten Detektor (36), welcher dazu ausgelegt ist, im Fall von interpolierten Daten die vorherigen Daten zu analysieren, um diejenigen zu erfassen, die Nicht-Sprachdaten entsprechen,
- Verschlüsselungsmittel (38), welche fähig sind, im Fall von Nicht-Sprachdaten die momentanen Daten gemäß einer gewählten Verschlüsselungsregel zu verschlüsseln, und
- einen Ausgang (42) zum Senden der derart verschlüsselten momentanen Nicht-Sprachdaten (24, 26) über ein Kommunikationsnetzwerk an einen entfernten Empfänger (3), so dass sie von dem besagten entfernten Empfänger als keine Nicht-Sprachdaten ausgelegt werden.

2. Vorrichtung nach Anspruch 1, weiterhin umfassend Mittel zum Speichern (40) der Muster der vorangehenden Daten.

3. Vorrichtung nach Anspruch 1, wobei die Verschlüsselungsregel ein Frequenzversatz ist.

4. Vorrichtung nach Anspruch 1, wobei die Verschlüsselungsregel eine Abschwächung oder eine Vorabschwächung der Frequenz ist.

5. Vorrichtung nach Anspruch 1, wobei die Verschlüsselungsregel die Unterdrückung einer Frequenzkomponente ist.

6. Vorrichtung nach Anspruch 1, wobei die Verschlüsselungsregel eine Frequenzmodulation ist.

7. Vorrichtung nach Anspruch 1, wobei die Verschlüsselungsregel ein Hinzufügen einer Frequenzkomponente ist.

8. Vorrichtung nach Anspruch 1, wobei die Verschlüsselungsregel ein vollständiges Schweigen ist.

9. Vorrichtung nach einem der Ansprüche 1 bis 8, wobei das Audiosignal Sprache sowie Signale vom Typ DTMF, Fax, Modem oder dergleichen enthält.

10. Verfahren zur Verarbeitung von digitalen Audiosignaldarstellungsdaten in einem Empfangssystem, wobei:
- man einen Fluss von digitalen Audiosignaldarstellungsdaten empfängt,
- man in dem besagten empfangenen Datenfluss die momentanen digitalen Daten erfasst, welche interpolierten Daten und nicht interpolierten Daten entsprechen,
- man im Anschluss an das Erfassen der interpolierten Daten die vorangehenden Daten analysiert, um darin Nicht-Sprachdaten zu erfassen
- und im Fall der Erfassung von Nicht-Sprachdaten die momentanen Daten gemäß einer gewählten Verschlüsselungsregel zu verschlüsseln; und
- man die derart verschlüsselten Daten über ein Kommunikationsnetzwerk an einen entfernten Empfänger sendet, so dass sie von dem besagten entfernten Empfänger als keine Nicht-Sprachdaten ausgelegt werden.
